Europäisches Patentamt

European Patent Office

Office européen des brevets

(19)

(11) Veröffentlichungsnummer: **0 289 634**
A1

# (12) EUROPÄISCHE PATENTANMELDUNG

(21) Anmeldenummer: 87106543.9

(22) Anmeldetag: 06.05.87

(51) Int. Cl.4 **A47J 37/08**

(43) Veröffentlichungstag der Anmeldung:
09.11.88 Patentblatt 88/45

(84) Benannte Vertragsstaaten:
**AT BE FR GB IT NL**

(71) Anmelder: **ROBERT KRUPS STIFTUNG & CO. KG.**
**Heresbachstrasse 29**
**D-5650 Solingen 19(DE)**

(72) Erfinder: **Hoffmann, Erich**
**Katterbachstrasse 38**
**D-5060 Bergisch-Gladbach(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) Elektrisch betriebener Toaster.

(57) Es handelt sich um einen elektrisch betriebenen Toaster, insbesondere um einen automatischen Toaster für Backwaren, wie Brot, in dessen Gehäuse mit Schalteinrichtungen zusammenwirkende Heizungen und eine wärmedurchlässige Wandungen aufweisende Aufnahme für das zu toastende Gut untergebracht sind. Gegebenenfalls sind im Bereich der unteren Austrittsöffnung der Aufnahme zeitweise wirkende Haltemittel (16) für das zu toastende Gut vorgesehen, die mit Betätigungseinrichtungen (17) oder mit Steuer-und Regeleinrichtungen zusammenwirken. Die seitlichen Begrenzungswandungen der Aufnahme für das zu toastende Gut sind jeweils aus einer Infrarotstrahlen durchlassenden und wärmespeichernden Platte, wie Glaskeramikplatte (13), gebildet. Als Heizung dient jeweils mindestens eine Halogenlampe (15), wie ein Infrarot-Quarzstrahler. Die Halogenlampen sind jeweils im Innenraum eines Reflektors (14) untergebracht, dessen vordere, der Aufnahme zugewandte Öffnung durch die Glaskeramikplatte verschlossen ist.

FIG. 1

## Elektrisch betriebener Toaster

Die Erfindung bezieht sich auf einen elektrisch betriebenen Toaster, insbesondere auf einen automatischen Toaster für Backwaren, wie Brot, in dessen Gehäuse mit Schalteinrichtungen zusammenwirkende Heizungen und eine wärmedurchlässige Wandungen aufweisende Aufnahme für das zu toastende Gut untergebracht sind, wobei gegebenenfalls im Bereich der unteren Austrittsöffnung der Aufnahme zeitweise wirkende Haltemittel für das zu toastende Gut vorgesehen sind, die mit Betätigungseinrichtungen zusammenwirken.

Derartige elektrisch betriebene Toaster sind in zahlreichen Ausführungsformen bekannt. Sie lassen sich in zwei Gruppen einteilen. Bei der ersten Gruppe der Toaster erfolgt das Ein-und Ausführen des zu toastenden Gutes im Bereich ein und derselben Öffnung. Nach der Beendigung des Toastens werden Einrichtungen wirksam, die das fertig zubereitete Toastgut teilweise aus dem Schlitz des Gehäuses herauswerfen, so daß es erfaßt werden kann. Bei der zweiten Gruppe von Toastern sind demgegenüber im Gehäuse zwei Öffnungen vorhanden, von denen die eine ganz oder teilweise zeitweilig durch ein Haltemittel verschlossen ist. Bei dieser Aus führungsform des Toasters wird das zu toastende Gut in einen Einführungsschlitz von oben in das Gehäuse eingeführt. Das getoastete Gut verläßt die Aufnahme durch einen im unteren Bereich des Gehäuses vorhandenen Ausführungsschlitz, der somit auf der der Einführungsöffnung gegenüberliegenden Seite des Gehäuses angeordnet ist. Auch bei diesen Ausführungsformen werden nach Fertigstellung des Toastgutes die zeitweilig wirkenden Haltemittel im Bereich der Unterkante des Toastes in ihre unwirksame Lage überführt, so daßdas getoastete Gut die Aufnahme nach unten hin verlassen kann. Durch eine solche Ausführungsform des Toasters soll erreicht werden, daß nach Beendigung des eigentlichen Toastvorganges das fertige Gut sofort vollständig aus der Aufnahme und damit aus dem Wirkungsbereich der Heizungen herausgeführt wird. Auf diese Weise will man eine mögliche Nachbräunung von Teilen des Toastgutes vermeiden. Auch sollen etwa anfallende Krumen nach unten hin aus der Aufnahme herausfallen, so daß ein Verbrennen von Krumen ausscheidet.

Die beiden diametral gegenüberliegenden Wandungen der Aufnahme für das zu toastende Gut sind bei beiden vorstehend genannten Gruppen von Toastern wärmedurchlässig. Dies erreicht man dadurch, daß man sie gitterförmig gestaltet. Das Gitter kann dabei unterschiedliche Gestalt aufweisen. Es können auch vorspringende Teile an dem Gitter vorhanden sein, die ein vollständiges Anliegen des zu toastenden Gutes an den Gitterstäben verhindern sollen. Derartige Gitter haben beim Gebrauch der Toaster -wie die Praxis gezeigt hat - erhebliche Nachteile. Zunächst müssen die Abstände der Gitterstäbe verhältnismäßig groß gehalten sein, damit die von der elektrischen Heizeinrichtung ausgehenden Wärmestrahlen - wie gewollt - auf die Oberfläche des zu toastenden Gutes gelangen können. Dadurch wird aber auch die Möglichkeit geschaffen, daß von dem zu toastenden Gut abfallende Krumen durch die Öffnungen des Gitters hindurch in den Unterbringungsraum der Heizeinrichtungen fallen und sich dort im Bodenbereich ansammeln. Insbesondere bei längerem Betrieb eines solchen Toasters kann es zu Verbrennungen dieser Krumen kommen. Auch lassen sich derartige mit Gittern versehene Toaste verhältnismäßig schlecht reinigen, zumal die Gitter in aller Regel fest mit den benachbarten Teilen des Gehäuses des Toasters fest verbunden sind. Ein weiterer Nachteil ist, daß die Stäbe des Gitters sich vielfach auf der Oberfläche des zu toastenden Gutes abbilden und es damit zu einer unregelmäßigen Bräunung des zu toastenden Gutes kommt.

Bei beiden genannten Gruppen von elektrisch betriebenen Toastern wird als elektrische Heizeinrichtung in aller Regel eine elektrische Widerstandsheizung benutzt. Diese hat in vielerlei Hinsicht Nachteile. Einmal müssen die Widerstandsdrähte hergestellt und dazu in aller Regel noch gewendelt werden. Die gewendelten Drähte sind dann auf Isolierträgern aufzubringen und eine so vorbereitete elektrische Heizeinrichtungseinheit muß dann in dem Gehäuse untergebracht werden. Alle diese Arbeiten erschweren die Herstellung und Montage. Ein weiterer wesentlicher Nachteil einer elektrischen Widerstandsheizung ist der, daß nach dem Einschalten des elektrischen Stromes nicht sofort die max. mögliche Wärmeabgabe erfolgt. Vielmehr haben die elektrischen Widerstandsheizungen eine erhebliche Anlaufzeit, was zu einer Verzögerung hinsichtlich der Herstellungszeit des zu toastenden Gutes führt. Andererseits geben derartige elektrische Widerstandsheizungen nach dem Abschalten noch über eine längere Zeit Wärme ab. Dies führt zu einem ungewollten Nachbräunen des zu toastenden Gutes, insbesondere dann, wenn nicht sofort dafür gesorgt wird, daß das fertig hergestellte Toastgut die Aufnahme des Toasters verlassen kann.

Aufgabe der vorliegenden Erfindung ist es, elektrisch betriebene Toaster der eingangs näher gekennzeichneten Art unter Vermeidung der angeführten Nachteile weiter zu verbessern. Insbesondere wird eine gleichmäßige Bräunung des zu toastenden Gutes angestrebt. Ferner soll die Fertigung und die Montage der Einzelteile des Toasters im Vergleich mit dem Bekannten erleichtert werden.

Zur Lösung dieser Aufgabe wird erfindungsgemäß vorgeschlagen, die seit lichen Begrenzungswandungen der Aufnahme für das zu toastende Gut jeweils als eine Infrarotstrahlen durchlassende und wärmespeichernde Platte, wie Glaskeramikplatte auszubilden und als Heizung jeweils mindestens eine Halogenlampe, wie einen Infrarot-Quarzstrahler zu benutzen, wobei diese Halogenlampen jeweils im Innenraum eines Reflektors liegen, dessen vordere, der Aufnahme zugewandte Öffnung durch die Glaskeramikplatte verschlossen ist. Die erfindungsgemäße Ausbildung eines elektrisch betriebenen Toasters hat gegenüber dem Bekannten erhebliche Vorteile. So treten an die Stelle der bisherigen Gitter als Seitenwände der Aufnahme des zu toastenden Gutes Glaskeramikplatten. Diese bilden jeweils eine geschlossene Seitenwand der Aufnahme, so daß damit zunächst das Durchfallen von Krumen des zu toastenden Gutes in den Unterbringungraum der elektrischen Heizeinrichtungen entfällt. Auch lassen sich die Glaskeramikplatten wesentlich besser reinigen als die bisherigen Gitterwände.

Die Verwendung von Halogenlampen als elektrische Heizeinrichtung eines Toasters hat gegenüber der bisher üblichen elektrischen Widerstandsbeheizung wesentliche Vorteile. So haben die benutzten Halogenlampen praktisch keine Anlaufzeit sondern die Abstrahlung erfolgt sofort nach dem Einschalten des elektrischen Stromes. Dies wirkt sich auf die Zubereitungszeit des zu toastenden Gutes vorteilhaft aus. Darüber hinaus hört bei den Halogenlampen nach Abschalten des elektrischen Stromes die Wärmeabgabe sofort auf, so daß schon allein aus diesem Grunde ein unerwünschtes Nachbräunen des zu toastenden Gutes entfällt. Darüber hinaus sorgen die von den Halogenlampen ausgehenden Infrarotstrahlen für eine vollkommen gleichmäßige Bräunung des zu toastenden Gutes, wie durchgeführte Versuche ergeben haben. Die Infrarotstrahlen durchdringen die Glaskeramikplatten ohne nennenswerte Verluste, wobei hinzukommt, daß diejenigen Infrarotstrahlen, die nicht sofort direkt durch die Glaskeramikplatte hindurchtreten, durch den vorhandenen Reflektor ebenfalls in Richtung auf die Glaskeramikplatte zurückgestrahlt werden und dann ebenfalls die Glaskeramikplatte durchdringen und auf das zu toastende Gut gelangen. Ein weiterer Vorteil ist der, daß die Glaskeramikplatte als Wärmespeicher dient und daher die Wärme auf die in unmittelbarer Nähe liegenden Oberflächen des zu toastenden Gutes abgibt.

Die durchgeführten Versuche mit dem erfindungsgemäßen Toaster haben ferner gezeigt, daß das Gehäuse des Toasters praktisch nicht aufgewärmt wird. Die Anordnung des Reflektors verhindert die Einwirkung der von der Halogenlampe abgestrahlten Energie auf die Gehäusewandungen. Dies hat den Vorteil, daß bei der Herstellung des Gehäuses des erfindungsgemässen Toasters auch solche Werkstoffe eingesetzt werden können, die verhältnismäßig wenig temperaturbeständig sind. Dies macht sich in Bezug auf die Herstellungskosten des Gehäuses vorteilhaft bemerkbar.

Bei der bevorzugten Ausführungsform ist die Halogenlampe jeweils im Brennpunkt eines im Querschnitt halbkreisförmigen Reflektors angeordnet, und der Krümmungsmittelpunkt des Reflektors liegt in der Grundebene der Glaskeramikplatte. Bei einer solchen Anordnung der Halogenlampe wird ein Teil der Strahlen von der Halogenlampe direkt in Richtung auf die Glaskeramikplatte abgestrahlt. Der andere Teil der Strahlung gelangt zunächst zum Reflektor und wird von dort aus zurückgeworfen, was wegen der Anordnung der Halogenlampe im Brennpunkt praktisch in paralleler Richtung erfolgt, d.h. die vom Reflektor zurückgeworfenen Strahlen treffen senkrecht auf die Glaskeramikplatte auf, die in der Öffnung des Reflektors diesen verschließend angeordnet ist. Generell sei gesagt, daß handelsübliche Halogenlampen Verwendung finden können. Dabei werden bevorzugt solche Ausführungsformen benutzt, bei denen die Infrarotstrahlungsausbeute verhältnismäßig groß ist. Da es im Handel Halogenlampen unterschiedlicher Abmessungen und Leistungen gibt, hat man es in der Hand, die Abmessungen des Gehäuses des Toasters nach den Dimensionen der Halogenlampe auszurichten, und man kann ferner Halogenlampen unterschiedlicher Leistung verwenden.

Es empfiehlt sich, das innenliegende Ende der Aufnahme für das Toastgut durch ein in die Bewegungsrichtung des Toastgutes einbringbares Haltemittel zeitweise zu versparren. Auf diese Weise wird dafür gesorgt, daß das zu toastende Gut in der Aufnahme genau diejenige Lage einnimmt, die für den Toastvorgang erforderlich ist. Dabei ist die Möglichkeit gegeben, dem Haltemittel sowohl eine unterschiedliche Gestalt zu geben als es auch an unterschiedlicher Weise am unteren Ende der Aufnahme anzubringen.

Nach einem ersten Vorschlag der Erfindung dient als Haltemittel für das Toastgut ein über eine Betätigungseinrichtung lagemäßig beeinflußbarer Boden der Aufnahme. Dieser Boden schließt in seiner wirksamen Lage die Aufnahme nach unten hin ab und dient dabei als Aufstützfläche für die Unterkante des Toastgutes. Nach Beendigung des Toastens kann dieser Boden entweder geradlinig fortgezogen werden oder aber es ist ein Verschwenken um etwa 90° möglich. In beiden Fällen können für die Bewegung des Bodens an sich bekannte Betätigungseinrichtungen eingesetzt werden.

Nach einem anderen Vorschlag der Erfindung ist die Aufnahme für das Toastgut durch ein - schwenkbares, mit einer Regel-und Steuereinrichtung zusammenwirkendes Haltemittel zeitweise verschließbar. Bei einer solchen Ausführungsform braucht nicht die gesamte untere Öffnung der Aufnahme abgeschlossen zu werden sondern es genügt, daß dies nur insoweit erfolgt, als eine Stützfläche für die Unterkante des Toastgutes geschaffen wird.

Dabei ist bei einer Ausführungsform am inneren Ende der Aufnahme für das Toastgut ein in die Bewegungsbahn des Toastgutes bringbares, geradlinig verschiebbares Haltemittel, vorzugsweise in Form eines Haltestiftes angeordnet. Die Länge eines solchen Haltestiftes braucht nur etwas größer gehalten zu sein als die halbe Breite der Aufnahme für das Toastgut.

Das Haltemittel läßt sich wahlweise manuell oder mittels einer Steuer-und Regeleinrichtung betätigen. Bei wirtschaftlich einfachen Ausführungsformen des Toasters wird der manuellen Bedienung der Vorzug gegeben. In diesem Falle erfolgt das Überführen des Haltestiftes in seine Ruhe oder Sperrlage jeweils von Hand aus. Dies kann durch eine aus dem Gehäuse herausragende Handhabe erfolgen. Bei wirtschaftlich aufwendigeren Ausführungsformen des Toasters kann man dagegen automatische Regel-und Steuereinrichtungen einsetzen. Das Einschalten des Regel-und Steuereinrichtung, insbesondere das Einschalten des elektrischen Stromes zur Versorgung der Halogenlampen und zum Einschalten einer Zeituhr kann durch das Eigengewicht des Toastgutes selbst erfolgen. D.h. in dem Augenblick, wo sich das in die Aufnahme eingebrachte Toastgut am Boden oder am Haltestift abstützt, wird zugleich ein Schalter betätigt, durch den die Stromversorgung für die Halogenlampe und für eine Zeituhr in Gang gesetzt wird. Dabei hat man die Möglichkeit, die Zeituhr einzustellen, so daß man den gewünschten Bräunungsgrad für das herzustellende Toastgut selbst wählen kann.

Die Halogenlampen sind zweckmäßig im Innenraum des Reflektors durch an den Seitenwandungen des Gehäuses befestigbare Lampenfassungen gelagert. Auch hier können Lampenfassungen benutzt werden, die im Handel erhältlich sind. Damit kann auf die herstellung von Sonderkonstruktionen verzichtet werden.

Im Normalfall nimmt die Halogenlampe im Innenraum des Reflektors ein-und dieselbe Lage ein, d.h. sie ist lagekonstant. In Sonderfällen ist es jedoch auch möglich, die Halogenlampe lageveränderlich zu gestalten, d.h. ihren Abstand im bezug auf den Reflektor bzw. im bezug auf die Glaskeramikplatte zu verändern. In einem solchen Falle kann man beispielsweise die Lampenfassungen an den Innenwandungen des Gehäuses lageverändern. Die jeweils eingestellte Lage läßt sich durch Schnapp-oder Rastverbindungen stabilisieren, so daß es nicht zu ungewollten Verschiebungen de Lage der Halogenlampe im Innenraum des Reflektors kommt.

Im Normalfall genügt es, wenn man einem Reflektor eine einzige Halogenlampe zuordnet. In Sonderfällen ist es aber auch möglich, mehr als eine Halogenlampe zu verwenden. Geschieht dies, dann kann man wahlweise entweder sämtliche Halogenlampen gleichzeitig mit Strom versorgen. Daneben ist aber auch eine einzel-oder gruppenweise Schaltung möglich. Ferner kann man in ein und demselben Gehäuse des Toasters auch mehrere der erfindungsgemäßen Heizeinrichtungen in Form von Halogenlampen, Glaskeramikplatte und Reflektor anordnen, beispielsweise dann, wenn das Gehäuse derartige Abmessungen hat, daß man mehrere Toastscheiben neben-ode übereinander gleichzeitig behandeln will. Ähnliches gilt auch, wenn man sogenannte Landbrotscheiben oder generell Brotscheiben mit größeren Abmessungen toasten will.

In den Figuren der Zeichnungen ist die Erfindung in mehreren Ausführungsbeispielen dargestellt und zwar zeigen:

Fig. 1 eine erste Ausführungsform eines elektrisch betriebenen Toasters in Seitenansicht,

Fig. 2 eine zweite Ausführungsform eines erfindungsgemäß ausgebildeten, elektrisch betriebenen Toasters in der einen Endstellung des Gehäuses der Toasters,

Fig. 3 in schaubildlicher Darstellung eine dritte Ausführungsform des elektrisch betriebenen, erfindungsgemäßen Toasters,

Fig. 4 in schematischer Darstellung, teilweise weggebrochen, eine Einzelheit des erfindungsgemäßen, elektrisch betriebenen Toasters nach der Fig. 3 der Zeichnung und

Fig. 5 im vergrößerten Maßstab einen Teilschnitt durch den erfindungsgemäßen Toaster gemäß der Fig. 3 der Zeichnung.

Es sei zunächst erwähnt, daß in den Figuren der Zeichnungen nur diejenigen Teile eines elektrisch betriebenen Toasters wiedergegeben sind, welche für das Verständnis der Erfindung Bedeutung haben. So sind insbesondere Teile der vorhandenen elektrischen Schalt-und Steuereinrichtungen fortgelassen, außerdem die elektrischen Kabel, Zuleitungen od.dgl. Im übrigen können alle in den Zeichnungen nicht dargestellten Teile eines elektrisch betriebenen Toastes eine bekannte Ausbildung haben und in ebenfalls bekannter Weise im oder am Gehäuse des Toasters angeordnet sein.

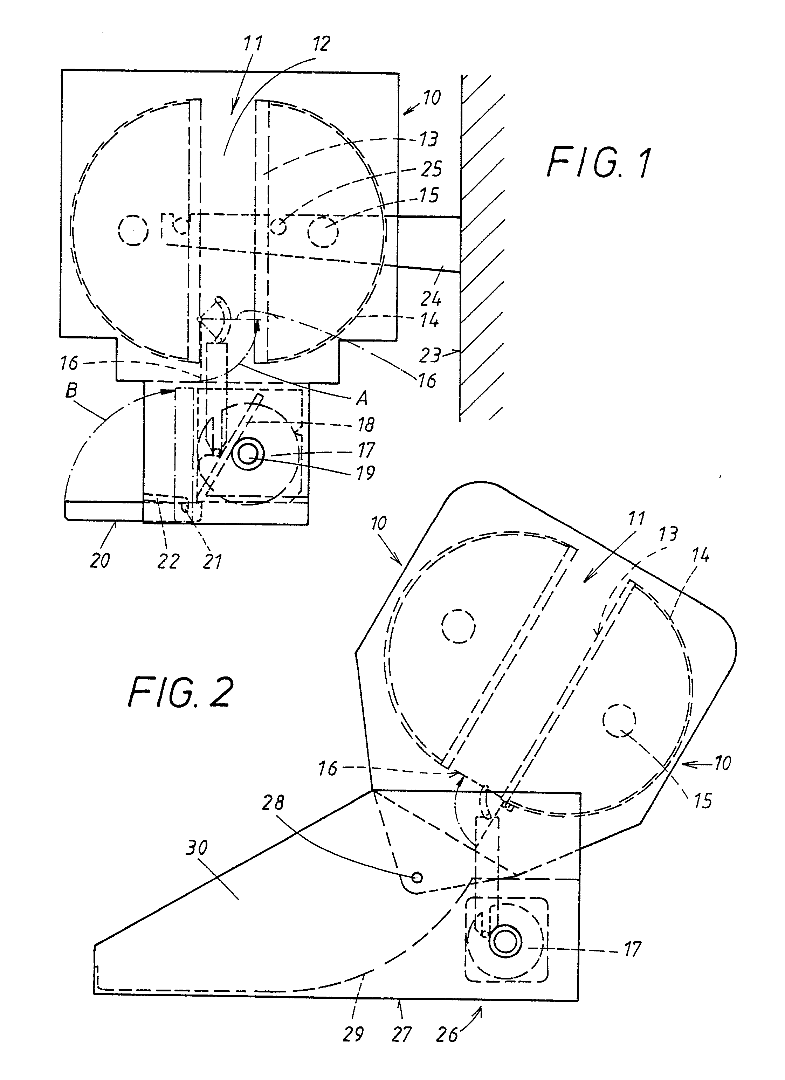

Der dem Ausführungsbeispiel nach der Fig. 1 der Zeichnung zugrunde gelegte elektrisch betriebene Toaster hat ein etwa kastenförmig gestaltetes Gehäuse, welches mehrstückig ist. Das Gehäuse besteht aus einer Rückwand, welche die gesamte rückwärtige Fläche des Toastes erfaßt, aus einer Vorderwand und aus zwei Seitenwänden. Die Rückwand besitzt außerdem Verlängerungen.Durch rechtwinkliges Abkanten einer dieser Verlängerungen wird eine Decke geschaffen. Ein weiterer Deckenbereich wird durch eine Verlängerung der vorderen Seitenwand gebildet. Die beiden Kanten der Deckenbereiche sind gegeneinander gerichtet und lassen einen genügend breiten Einführungsschlitz 11 frei. Durch diesen Einführungsschlitz wird das Toastgut in den Toaster eingeführt. Dem Einführungsschlitz 11 schließt sich die Aufnahme 12 für das zu toastende Gut an. Eine zweite Verlängerung der Rückwand des Gehäuses 10 ist mehrfach abgekantet und bildet den gesamten Boden des Gehäuses 10.

Die Aufnahme 12 für das zu toastende Gut wird auf zwei gegenüberliegenden, sich senkrecht erstreckenden Seiten durch je eine Glaskeramikplatte 13 begrenzt. Für die Herstellung der Glaskeramikplatte 13 können solche Werkstoffe benutzt werden, die unter dem Warenzeichen "Ceran" im Handel erhältlich sind. Wie die Fig. 1 erkennen läßt, sind die Vorderseiten der beiden Glaskeramikplatten 13 völlig eben gehalten.

Die Glaskeramikplatte 13 bildet jeweils den Abschluß eines Reflektors 14, der aus einem geeigneten Werkstoff, beispielsweise aus Aluminium hergestellt ist. Im gewählten Ausführungsbeispiel nach der Fig. 1 der Zeichnung ist der Reflektor 14 im Querschnitt gesehen halbkreisförmig gestaltet. Im Mittelpunkt des Reflektors 14 ist eine Halogenlampe 15 angeordnet, während der Krümmungsmittelpunkt des Reflektors 14 in der Ebene der Glaskeramikplatte 13 liegt. In dem Ausführungsbeispiel nach der Fig. 1 der Zeichnung ist jedem der beiden im Gehäuse 10 angeordneten Reflektoren 14 eine einzige Halogenlampe 15 zugeordnet. Es kann sich hierbei um eine handelsübliche Halogenlampe handeln, die allerdings derart beschaffen sein sollte, daß ihr Infrarotabstrahlfaktor möglichst hoch ist. Die Infrarotstrahlen durchdringen praktisch verlustfrei die Glaskeramikplatte 13, die die Öffnung des Reflektors 14 jeweils abschließt. Die nicht direkt in Richtung auf die Glaskeramikplatte 13 abgestrahlten, von der Halogenlampe stammenden Infrarotstrahlen werden von der Innenseite des Reflektors zurückgeworfen und gelangen danach wiederum durch die Glaskeramikplatte hindurch auf das in der Aufnahme 12 befindliche zu toastende Gut und bräuen - wie gewollt - dessen Oberfläche. Im übrigen wird beim bestimmungsgemäßen Gebrauch des elektrisch betriebenen Toasters die Glaskeramikplatte 13 erwärmt und gibt ihre Wärme dann an das in ihrer unmittelbaren Nachbarschaft befindliche zu toastende Gut ab.

Der mit 16 bezeichnete Boden des Aufnahmeraumes 12 ist als zeitweilig entfernbare Klappe ausgebildet, die sowohl in ihrer waagerechten als auch in ihrer senkrechten Stellung mittels einer an sich bekannten Vorrichtung verlagert werden kann. In der Fig. 1 der Zeichnung sind beide Stellungen des Bodens 16 angedeutet. Der Schwenkweg ist durch einen Pfeil A markiert-Zur Betätigung des Bodens 16 dient die generell mit 17 bezeichnete Betätigungsvorrichtung. Da - wie gesagt - die Betätigungsvorrichtung 17 grundsätzlich bekannt ist, wird auf die Angabe näherer Einzelheiten verzichtet. Es sei jedoch erwähnt, daß eine Ausführungsform einer solchen Betätigungsvorrichtung in der DE-GM 1 875 692 enthalten ist. Erwähnt sei lediglich, daß der Betätigungsvorrichtung 17 ein nach außen hin ragender und daher frei zugänglicher Betätigungsknopf 19 zugeordnet ist. Ferner sei erwähnt, daß durch Verdrehen des Betätigungsknopfes 19 eine exzentrisch an einer Scheibe der Betätigungsvorrichtung 17 gelagerte Betätigungsstange angehoben wird, wobei die obere Spitze infolge der gelenkigen Lagerung der Führungsstange und ihrer gelenkigen Verbindung mit dem Boden 16 demjenigen Radius folgt, den der Boden 16 beim Schwenken ausführt.

Der Boden 16 dient zum Entfernen des Toastgutes aus der Aufnahme 12. Dabei wird das nach unten durchfallende Toastgut zunächst von einem Gleitblech 18 aufgefangen. Dieses Gleitblech 18 ist derart schräg gestellt, daß seine obere freie Kante etwa senkrecht unter der hinteren Glaskeramikplatte 13 liegt. Dagegen übergreift die Unterkante des Gleitbleches 18 die hintere Kanke eines Auffangbehälters 20. Dieser Auffangbehälte 20 dient - wie schon sein Name sagt - zum Auffangen des aus dem Toastraum 12 nach unten fallenden Toastgutes und ist vom Gehäuses 10 des Toasters abnehmbar. Der Auffangbehälter 20 kann bei Nichtgebrauch in den Toaster hineingeklappt werden. Das Herausnehmen und auch das Klappen des Auffangbehälter2 20 sind durch je einen seitlichen Lagerstift 21 ermög licht, welche den Seitenwandungen des Auffangbehälters 20 zugeordnet sind. Die freien Enden der Lagerstifte 21 greifen in eine Nut 22 ein, die aus einem nicht näher bezeichneten waagerechten und einem senkrechten Teilbereich zusammengesetzt ist. Das Hochklappen des Auffangbehälters 20 erfolgt in einfacher Weise - scharnierartig. Die Verschwenkrichtung ist in der Fig. 1 durch den Pfeil B gekennzeichnet.

Gemäß dem Ausführungsbeispiel nach der Fig. 1 der Zeichnung ist der gesamte Toaster nicht auf einer Fläche, wie auf einem Tisch aufgestellt sondern an einer Wand 23 aufgehängt. Zu diesem Zweck sind mit bekannten Mitteln an der Wand 23 zwei Konsolen 24 befestigt, welche beispielsweise durch in der Zeichnung nicht dargestellte Schlitze in der Rückwand des Gehäuses 10 parallel zu den beiden Seitenwänden in das Gehäuse eingreifen können. Die Seitenwände des Gehäuses 10 weisen Nocken 25 auf, die in oben offene Ausnehmungen der Konsolen 24 eingreifen, so daß der Toaster als Hängegerät benutzt werden kann. Wahlweise ist natürlich auch ohne weiteres ein Aufstellen des Gehäuses möglich. In diesem Falle ruht das Gehäuse 10 mit seiner unteren Grundfläche auf einer Aufstellfläche, beispielsweise auf einem Tisch.

Die zweite Ausführungsform des erfindungsgemäßen elektrisch betriebenen Toasters gemäß der Fig. 2 der Zeichnung stimmt mit derjenigen nach der Fig. 1 in wesentlichen Punkten überein. Dies gilt z.B. für die Ausbildung der elektrischen Heizeinrichtungen, der Reflektoren und der Glaskeramikplatten und auch im Hinblick auf die Betätigungsvorrichtung 17. Es fehlt jedoch bei der Ausführungsform nach der Fig. 2 der Zeichnung der Auffangbehälte 20. Stattdessen ist dem Gehäuse 10 ein generell mit 26 bezeichneter Aufstellteil zugeordnet, der Seitenwandungen 30 aufweist, die zur Lagerung von zwei Schwenkachsen 28 dienen. Mittels dieser beiden Schwenkachsen ist das Gehäuse 10 des elektrisch betriebenen Toasters - schwenkbar an dem Aufstellteil 26 gelagert. In der Fig. 2 ist die eine der beiden möglichen Schwenkstellungen wiedergegeben. Es ist diejenige, in welcher der Boden 16 der Aufnahme 12 zum Herausgleiten des fertig getoasteten Gutes verschwenkt werden kann. In diesem Falle gelangt das fertige Toastgut aus der Aufnahme 12 auf eine Rutsche 29, die durch einen nicht näher bezeichneten Endanschlag begrenzt ist. Durch diesen Endanschlag wird die Gleitbewegung des fertig getoasteten Gutes begrenzt.

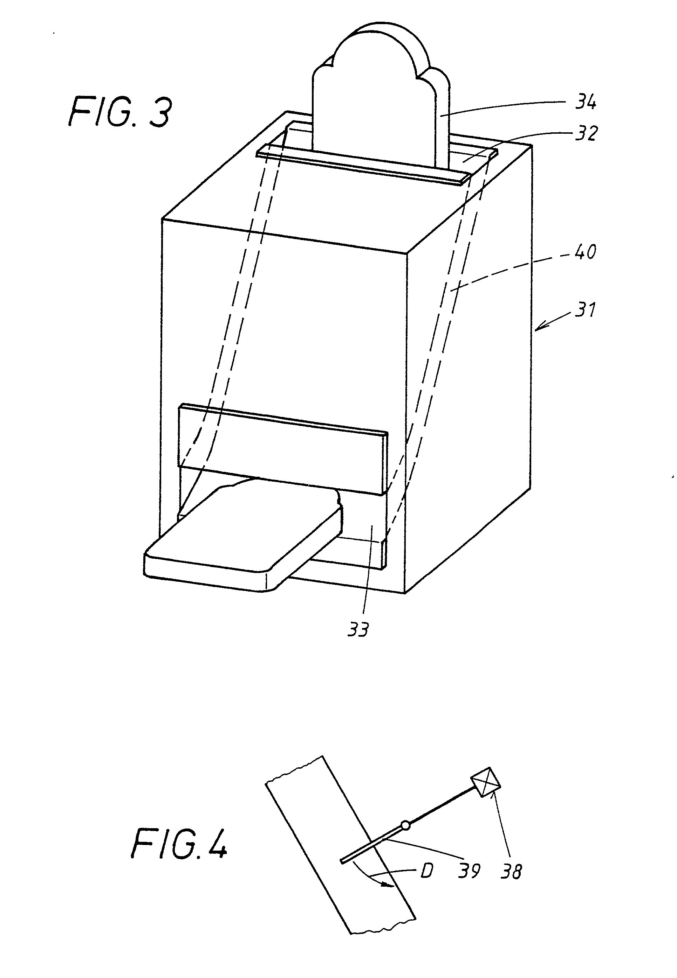

In der schaubildlichen Fig. 3 der Zeichnung ist schematisch eine dritte Ausführungsform des elektrisch betriebenen Toasters wiedergegeben. In diesem Falle ist das Gehäuse mit 31 bezeichnet. Es ist etwa quaderförmig gestaltet, wobei die eine der kleineren Grundflächen des Quaders als Aufstellfläche des Gehäuses 31 dient. In der Decke des Gehäuses 31 ist seitlich aus der Mitte versetzt liegend ein Einführungsschlitz 32 vorgesehen, in welchen das zu toastende Gut 34 eingebracht werden kann. In der Fig. 3 ist die Lage des Toastgutes 34 beim Einführen in den Einführungsschlitz 32 dargestellt. Dem Einführungsschlitz 32 schließt sich ein generell mit 40 bezeichneter Durchgang an, der in seinen Breitenabmessungen diejenige des zu toastenden Gutes überschreitet und der praktisch das Gehäuse 31 in seiner ganzen Länge durchsetzt, denn die Austrittsöffnung 33 für das fertig getoastete Toastgut liegt in Nähe der unteren Aufstellfläche des Gehäuses 31, wie dies die Fig. 3 erkennen läßt.

Der mittlere Teil des Durchganges 40 dient als Aufnahme 35 für das zu toastende Gut, d.h. in der Aufnahme 35 bleibt das durch den Einführungsschlitz 32 eingebrachte Toastgut so lange liegen, bis es die gewünschte Bräune erreicht hat. Vom Einführungsschlitz 32 aus gesehen gelangt das zu toastende Gut 34 in Richtung des Pfeiles C in den Aufnahmeraum 35. Das Toastgut 34 wird an einem sofortigen Verlassen des Durchganges 40 dadurch gehindert, daß am Ende der Aufnahme ein Haltemittel 37 ange ordnet ist, dem Steuer-und Regeleinrichtungen 36 zugeordnet sind. D.h. das Haltemittel 37 durchsetzt den Durchgang 40 und verhindert somit, daß das Toastgut 34 in den Bereich des Austrittsschlitzes 33 gelangen kann.

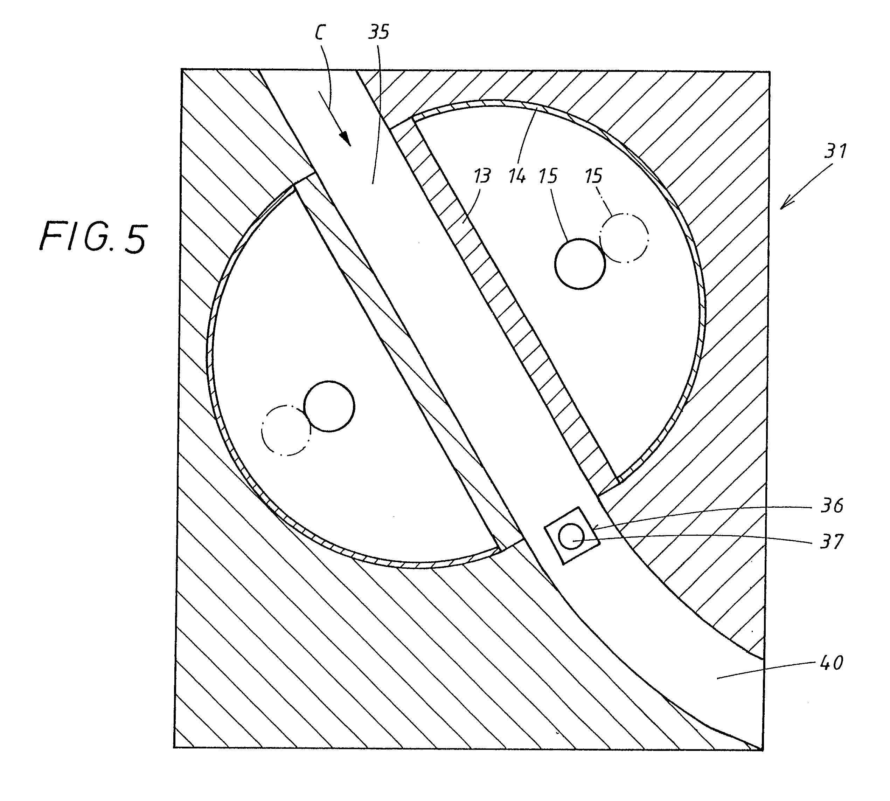

Die elektrisch betriebene Heizeinrichtung und die damit zusammenwirkenden Teile des elektrisch betriebenen Toasters bei der dritten Ausführungsform der Erfindung sind am besten aus der Fig. 5 der Zeichnung ersichtlich. Daraus ergibt sich, daß in dem Gehäuse 31 auf gegenüberliegenden Seiten des Durchganges 40 liegend je ein Reflektor 14 angeordnet ist, der wiederum im Querschnitt gesehen halbkreisförmig gestaltet und beispielsweise aus Aluminium hergestellt ist. Das vordere freie Ende jedes Reflektors 14 ist durch eine Glaskeramikplatte 13 verschlossen. Diese hat eine vollständig geschlossene Oberfläche, so daß es unmöglich ist, daß von dem Toastgut etwa abfallende Krümel in den vom Reflektor 14 umgebenen Raum gelangen.

Im Krümmungsmittelpunkt des Reflektors 14 ist jeweils eine Halogenlampe 15 angeordnet, während der Krümmungsmittelpunkt des Reflektors 14 in der Ebene der Glaskeramikplatte 13 liegt. Es sei an dieser Stelle eingeschaltet, daß in allen Ausführungsformen der Erfindung den benutzten Halogenlampen 15 bekannte Halogenlampenfassungen zugeordnet sind, die mit den üblichen Mitteln an den Innnenwandungen der Gehäusewandungen befestigt sind. Während bei den Ausführungsbeispielen nach den Fig. 1 und 2 der Zeichnung die Lampenfassungen an den Seitenwandungen derart befestigt sind, daß eine Lageveränderung unmöglich ist, wird bei der Ausführungsform gemäß der Fig. 5 der Zeichnung vorgesehen, daß eine Verschiebung der Lampenfassung und zwar senkrecht zu der Glaskeramikplatte 13 durch geführt werden kann. In der Fig. 5 ist in strichpunktierten Linien eine andere Lage der Halogenlampe 15 wiedergegeben. Die jeweilige Lage kann durch Mittel, wie Verrastungen, festgelegt werden. Auf diese Weise ist eine Anpassung des Abstandes der Halogenlampe 15 vom Reflektor 14 bzw. von der Glaskeamikplatte 13 möglich. Da - wie schon erwähnt -die benutzten Halogenlampen 15 Infrarotstrahlen aussenden, werden diese bei den erfindungsgemäßen Toastern benutzt, um eine gleichmäßige Bräunung des in der Aufnahme 35 befindlichen Toastgutes 34 zu ermöglichen. Durch die an sich bekannten Steuer- und Regeleinrichtungen 36 wird das Haltemittel 37, beispielsweise ein Haltestift, so lange in seiner Sperrstellung gehalten, bis der gewünschte Bräunungsgrad erreicht ist. Zu den Steuer-und Regeleinrichtungen kann somit auch eine Zeituhr gehören, durch die die Länge des Brennens der Halogenlampe 15 beeinflußbar ist. Sobald das Toastgut 34 die gewünschte Bräune erreicht hat, wird durch an sich bekannte Mittel das Halteelement 37 zurückgezogen und damit der Weg freigegeben für das weitere Duchfallen des fertig getoasteten Gutes 34, das über den Austrittsschlitz 33 das Gehäuse 31 des elektrisch betriebenen Toasters verläßt.

In der Fig.4 der Zeichnung ist noch eine Variante der Steuer-und Regeleinrichtung sowie des Haltemittels dargestellt. In diesem Falle wird als Haltemittel ein schwenkbarer Körper 39 benutzt, dessen Schwenkrichtung mit dem Pfeil D gekennzeichnet ist. In der dargestellten Lage gemäß der Fig. 4 ragt das schwenkbare Haltemittel 39 in den Durchgang 40 und verhindert somit ein Durchfallen des Toastgutes 34. Vielmehr wird das Toastgut in der Aufnahme 35 des Durchganges 40 so lange gehalten, bis die gewünschte Bräunung durch die Halogenlampen erzielt ist. Mit dem - schwenkbaren Haltemittel 39 können dabei an sich bekannte Steuer-und Regeleinrichtungen benutzt werden, die als Blockschaltbild wiedergegeben sind.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere für die Anzahl und die Anordnung der als elektrische Heizeinrichtung dienenden Halogenlampen und auch der damit zusammenwirkenden Reflektoren. Insbesondere ist es möglich, ein und demselben Reflektor mehr als eine Halogenlampe zuzuordnen, wobei sich die Möglichkeit ergibt, daß man diese Halogenlampen nebeneinander anordnet und die dazugehörigen Schalter so ausbildet, daß man die Möglichkeit erhält, sämtliche Halogenlampen zugleich einzuschalten, daneben aber auch eine Einzel-oder gruppenweise Schaltung der Halogenlampen durchführen kann.

Bei der Ausführungsform des elektrisch betriebenen Toasters nach der Fig. 3 der Zeichnung kann man die Steuer-und Regeleinrichtungen unterschiedlich gestalten. So ist es beispielsweise möglich das in den Durchgang 40 hineinragende Haltemittel mit einem Schalter zu kombinieren, der dann eingeschaltet wird, wenn das Toastgut 34 an ihm anliegt. Dies bedeutet, daß das Gewicht der am Haltemittel 37 angreifenden Toastscheibe dazu benutzt wird, die Schalt-und Regeleinrichtungen und damit auch eine Schaltuhr einzuschalten. Der weitere Verlauf ist dann der, daß nach Ablauf der eingestellten Zeit der Haltestift 37 zurückgezogen wird und damit das gebräunte Toastgut die Aufnahme 35 in Richtung auf den Austrittsschlitz 33 verlassen kann. In einfacheren Fällen ist es jedoch auch möglich, eine Regelung von Hand aus durchzuführen, d.h. über einen von außen her zugänglichen Handgriff wird beispielsweise der längsverschiebbare Haltestift in seine Sperrstellung übergeführt. Nach dem gewünschten erreichten Bräunungsgrad wird dann von Hand aus der Haltestift nach außen gezogen und der Weg zum Durchfallen des Toastgutes freigegeben. Man kann aber auch eine halbautomatische Steuereinrichtung benutzen.

Bezugszeichenliste:

10 - Gehäuse
11 - Einführungsschlitz
12 - Aufnahme
13 - Glaskeramikplatte
14 - Reflektor
15 - Halogenlampe
16 - Boden (von 12)
17 - Betätigungsvorrichtung (für 16)
18 - Gleitblech
19 - Betätigungsknopf
20 - Auffangbehälter
21 - Lagerstift
22 - Nut
23 - Wand
24 - Konsole
25 - Nocken
26 - Aufstellteil
27 - Stellfläche
28 - - Schwenkachse
29 - Rutsche
30 - Seitenwand
31 - Gehäuse (Fig. 3)
32 - Einführungsöffnung (von 31)
33 - Austrittsöffnung (in 31)
34 - Toastgut
35 - Aufnahme
36 - Steuer-und Regeleinrichtung
37 - Haltemittel (für 34)
38 - Steuer-und Regeleinrichtung (II)
39 - schwenkbares Haltemittel (für 34)
40 - Durchgang
A - Pfeil (Bewegungsrichtungen von 16)
B - Pfeil (Klapprichtung von 20)
C - Pfeil (Fallrichtung von 34)
D - Pfeil (Schwenkrichtung von 39)

**Ansprüche**

1. Toaster, insbesondere automatischer Toaster, für Backwaren, wie Brot, in dessen Gehäuse mit Schalteinrichtungen zusammenwirkende Heizungen und eine wärmedurchlässige Wandungen aufweisende Aufnahme für das zu toastende Gut untergebracht sind, wobei gegebenenfalls im Bereich der unteren Austrittsöffnung der Aufnahme zeitweise wirkende Haltemittel für das zu toastende Gut vorgesehen sind, die mit Betätigungseinrichtungen zusammenwirken,
**dadurch gekennzeichnet,**
daß die seitlichen Begrenzungswandungen der Aufnahme (12,35) für das zu toastende Gut jeweils als eine Infrarotstrahlen durchlassende und wärmespeichernde Platte, wie Glaskeramikplatte (13) ausgebildet sind und daß als Heizung jeweils mindestens eine Halogenlampe (15), wie ein Infrarot-Quarzstrahler benutzbar ist, die jeweils im Innenraum eines Reflektors (14) liegt, dessen vordere, der Aufnahme (12,35) zugewandte Öffnung durch die Glaskeramikplatte (13) verschlossen ist.

2. Toaster nach Anspruch 1, dadurch gekennzeichnet, daß die Halogenlampe (15) im Brennpunkt eines im Querschnitt halbkreisförmigen Reflektors (14) angeordnet ist und daO der Krümmungsmittelpunkt des Reflektors (14) in der Grundebene der Glaskeramikplatte (13) liegt.

3. Toaster nach Anspruch 1 und 2, dadurch gekennzeichnet, daß das innenliegende Ende der Aufnahme (12,35) für das Toastgut (34) durch ein in die Bewegungsrichtung des Toastgutes (34) einbringbare Haltemittel zeitweise versperrbar ist.

4. Toaster nach Anspruch 1 und 3, dadurch gekennzeichnet, daß als Haltemittel für das Toastgut (34) ein über eine Betätigungseinrichtung (17) lagemäßig beeinflußbarer Boden (16) der Aufnahme (12) dient.

5. Toaster nach Anspruch 1 und 3, dadurch gekennzeichnet, daß die Aufnahme (35) für das Toastgut (34) durch ein schwenkbares, mit einer Regel-und Steuereinrichtung (36) zusammenwirkendes Haltemittel (39) zeitweise verschließbar ist (Fig. 4).

6. Toaster nach Anspruch 1 und 3, dadurch gekennzeichnet, daß am inneren Ende der Aufnahme (35) für das Toastgut (34) ein in die Bewegungsbahn des Toastgutes (34) bringbares, geradlinig verschiebbares Haltemittel (37) vorzugsweise in Form eines Haltestiftes angeordnet ist (Fig. 5).

7. Toaster nach Anspruch 6, dadurch gekennzeichnet, daß das Haltemittel (37) manuell oder mittels eine Steuer-und Regeleinrichtung (36) betätigbar ist.

8. Toaster nach Anspruch 1 und 2, dadurch gekennzeichnet, daß die Halogenlampe (15) im Innenraum des Reflektors (14) durch an den Seitenwandungen des Gehäuses (10 bzw. 31) befestigbare Lampenfassung gelagert ist.

9. Toaster nach Anspruch 8, dadurch gekennzeichnet, daß die Halogenlampe (15) im Innenraum des Reflektors (14) lageveränderlich angeordnet ist.

10. Toaster nach Anspruch 9, dadurch gekennzeichnet, daß die jeweilige Lage der Halogenlampe (15) durch Rast-oder Schnappverbindungen der zugehörigen Lampenfassungen gesichert ist.

FIG. 1

FIG. 2

Fa. Robert Krups Stiftung & Co. KG.

# FIG. 3

# FIG. 4

Fa. Robert Krups Stiftung & Co. KG.

FIG.5

Fa. Robert Krups Stiftung & Co. KG

Europäisches
Patentamt

**EUROPÄISCHER RECHERCHENBERICHT**

Nummer der Anmeldung

EP  87 10 6543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 047 780  (BRAUN AG) <br> * Insgesamt * <br> --- | 1 | A 47 J  37/08 |
| X | US-A-3 304 406  (KING) <br> * Spalte 3, Zeilen 10-56; Figuren 1,2 * <br> --- | 1 | |
| A | CH-A-  486 873  (H. BREY K.G.) <br> * Figur 7 * <br> --- | 1,2 | |
| A | DE-A-2 024 996  (SIEMENS GmbH) <br> * Insgesamt * <br> --- | 1,2,9 | |
| A | DE-A-1 904 409  (COBARG) <br> * Seiten 9,10; Figuren 10,11 * <br> --- | 1,3,4,5 ,7 | |
| A | FR-A-2 365 301  (REVOMATT A.P.S.) <br> * Insgesamt * <br> --- | 1,3,4,5 ,7 | |
| A | GB-A-  558 193  (CHERRY) <br> * Seite 3, Zeilen 1-24; Figuren 2,3 * <br> --- | 3,4,6,7 | |
| A | US-A-1 552 337  (MOTTLAU) <br> * Figur 1 * <br> --- | 2 | RECHERCHIERTE SACHGEBIETE (Int. Cl.4) <br><br> A 47 J <br> F 24 C <br> H 05 B |
| A | US-A-3 800 691  (EATON. Jr.) <br> * Spalte 3, Zeilen 52-66; Figuren 3,7 * <br> --- | 8 | |
| D,A | FR-A-1 362 729  (KRUPS) <br> * Insgesamt * <br> --- | 1,3,4,5 ,7 | |
| E | DE-A-3 541 425  (KRUPS) <br> * Insgesamt * <br> ----- | 1-10 | |

Der vorliegende Recherchenbericht wurde für alle Patentansprüche erstellt

| Recherchenort | Abschlußdatum der Recherche | Prüfer |
|---|---|---|
| DEN HAAG | 15-12-1987 | SCHARTZ J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes
    Dokument

EPO FORM 1503 03.82 (P0403)